# FASCICULE DE BREVET EUROPEEN

(11) **EP 1 711 359 B1**
(45) Date de publication et mention de la délivrance du brevet: **29.02.2012**
(21) Numéro de dépôt: 04805704.6
(22) Date de dépôt: 14.12.2004
(51) Int. Cl.: B60J 1/18, B60J 7/02

(54) **VEHICULE A TOIT OUVRANT REPLIABLE VERTICALEMENT**
MIT EINEM VERTIKAL EINZIEHBAREN SCHIEBEDACH VERSEHENES FAHRZEUG
VEHICLE PROVIDED WITH A VERTICALLY RETRACTABLE OPEN ROOF

(30) Priorité: 02.02.2004 FR 0400971
(43) Date de publication de la demande: 18.10.2006
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2004/003221
(87) Numéro de publication internationale: WO 2005/082655

(56) Documents cités:
- DE-A1- 10 059 342
- US-A- 5 135 280
- US-A- 6 053 560

## Description

L'invention concerne un véhicule découvrable à toit rigide, en plusieurs parties (ou éléments), dont une partie au moins est escamotable.

On connaît déjà de tels véhicules.

Il s'agit ici d'un véhicule découvrable comprenant un bâti, un habitacle équipé de sièges, un capot arrière situé derrière les sièges et articulé en rotation sur le bâti, vers une extrémité arrière du véhicule, et donc un toit rigide escamotable, mobile entre une position fermée au-dessus de l'habitacle et une position ouverte dans laquelle le toit est rangé derrière lesdits sièges, le toit comprenant au moins un élément mobile de toit. Un tel véhicule est divulgué dans le document US 6,053,560.

Dans une application, un but de la présente invention est de pouvoir escamoter le toit dans un coffre arrière de faible volume, dû à l'emplacement du moteur.

Pour participer à la solution de tout ou partie des objectifs visés ci-dessus, il est proposé en premier lieu :
- que le véhicule comprenne en outre :
   * un espace sensiblement vertical de rangement de l'élément de toit dans sa position ouverte, l'espace étant situé longitudinalement derrière les sièges, de préférence juste derrière, et étant accessible depuis l'extérieur du véhicule en position ouverte du dit capot arrière,
   * des moyens de déplacement pour déplacer de façon guidée ledit élément de toit qui bascule entre sa position sensiblement horizontale, fermée au-dessus de l'habitacle, et sa position sensiblement verticale, ouverte, dans l'espace de rangement,
- et, que vers l'avant du capot arrière, se dresse à l'extérieur du véhicule une lunette arrière fixée à ce capot et se plaçant derrière l'élément de toit, pour fermer l'habitacle à l'arrière, dans la position fermée du toit et dudit capot arrière.

Par soucis de simplicité, fiabilité, efficacité et coût de revient réduit, il est par ailleurs conseillé que les moyens de déplacement de l'élément de toit précité comprennent au moins une glissière disposée sensiblement verticalement et située, longitudinalement, sensiblement au niveau des sièges, ou juste derrière eux.

Pour faciliter (en particulier manuellement) la manoeuvre de l'élément de toit à escamoter et rendre discret le mécanisme, on conseille que ledit élément de toit soit, vers l'arrière, articulé en rotation vis-à-vis du bâti du véhicule par engagement avec la glissière pour y coulisser comme un chariot.

Avantageusement, en position fermée au-dessus de l'habitacle, par au moins un doigt fixe en position , à l'arrière de l'élément de toit s'engagera localement et se bloquera de manière réversible dans ladite glissière ou avec ledit organe formant chariot pour maintenir ce premier élément de toit, lorsqu'il est basculé en position sensiblement verticale le long de la glissière, évitant ainsi à l'utilisateur de contrôler l'inclinaison. Ceci constitue une caractéristique pertinente, en elle-même.

Encore pour la sécurité et l'aisance d'utilisation, on conseille en outre que le coulissement de l'élément de toit le long de la (chaque) dite glissière soit assisté par au moins une deuxième glissière télescopique articulée en rotation.

Dans une application a priori privilégiée à un véhicule de style « cabriolet sportif » équipé d'un « tonneau cover » (capotage rigide situé juste derrière les sièges), on prévoit en outre que la lunette arrière se dresse fixement et sensiblement verticalement, à l'avant du capot, juste au dessus de l'espace de rangement, en position fermée de ce capot arrière.

Cette lunette définira avantageusement un panneau anti-remous vis-à-vis des filets d'air, lorsque le véhicule roule.

Un autre problème pris en compte concerne l'accessibilité au volume intérieur situé sous le capot arrière. A cet égard, on prévoit que ce capot s'étende de préférence, suivant l'axe longitudinal du véhicule, sensiblement entre l'arrière des sièges et l'extrémité arrière du véhicule où il est articulé en rotation par rapport au bâti, ce capot présentant en outre, de préférence, vers l'arrière, une forme galbée se terminant sensiblement verticalement à un niveau d'élévation sensiblement égal à celui de l'assise des sièges.

Dans une application a priori encore privilégiée, on prévoit que ledit volume du véhicule défini sous le capot arrière, lorsque celui-ci est en position fermée, contienne le moteur de déplacement du véhicule qui sera donc, alors, du type à toit ouvrant et à moteur arrière, les caractéristiques qui précèdent s'appliquant particulièrement à ce type de véhicule.

On notera encore que ranger le toit dans son espace de rangement en suivant un rayon de courbure qui évolue en fonction de la position plus ou moins repliée de ce toit permet de loger celui-ci dans un espace particulièrement étroit dans le sens de l'axe longitudinal du véhicule.

Dans le cadre déjà indiqué de la cinématique des mouvements du toit, l'invention s'est particulièrement attachée à trouver un compromis entre la fluidité du mouvement, la non-interférence avec la zone de l'habitacle réservée aux occupants, la fiabilité de la solution mécanique retenue et un basculement qui doit être rapide et de faible amplitude pour que le toit passe de sa position fermée sensiblement horizontale à sa position repliée sensiblement verticale.

Dans ses conditions, une autre caractéristique de l'invention conseille que le déplacement vers l'arrière et le bas du toit s'accompagne d'un décalage vertical entre le bord arrière dudit élément de toit et le bord avant de la partie du véhicule située derrière (qui constitue en quelque sorte un deuxième élément de toit), préalablement au repliement du toit.

Dans la description encore plus détaillée qui suit,
La figure 1 est une vue de côté d'un véhicule automobile muni d'un toit selon l'invention avec le toit en position fermée, les pointillés montrant la position ouverte,
La figure 2 est une vue en élévation du toit selon l'invention sur sa partie arrière.

Sur les figures, le véhicule convertible 1 est transformable en cabriolet et comporte un élément de toit 2 escamotable dans un volume de rangement 3 situé derrière les sièges 5, sous un capot arrière 7 susceptible d'être ouvert au moins pour laisser passer l'élément de toit 2 en position cabriolet.

Les sièges 5 sont ceux situés, en utilisation normale du véhicule, le plus à l'arrière, juste devant le volume 3 réservé au rangement du toit et, plus à l'arrière (en 3a) au chargement des bagages ou au logement du moteur 9 pour les véhicules à moteur arrière comme ce peut être le cas ici.

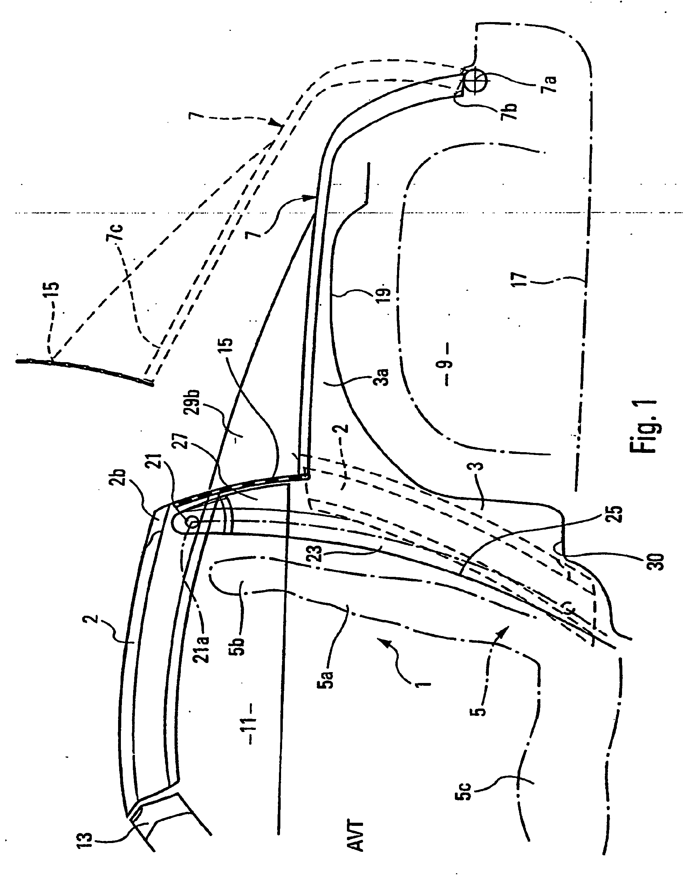

L'élément de toit 2 est mobile entre une position fermée (figure 1, trait plein) dans laquelle il s'étend au dessus de l'habitacle 11 (qu'il recouvre) et une position rangée, escamoté alors dans le volume arrière 3 (traits pointillés).

L'élément 2 est sensiblement plan, de sorte qu'il s'étend sensiblement horizontalement en position fermée, interposé entre la poutre transversale 13 supérieure de baie de pare-brise et la limite arrière du toit, laquelle est définie ici par une lunette arrière 15 liée fixement au capot arrière 7 et qui, en position fermée de ce capot, ferme l'habitacle à l'arrière.

Le capot 7 peut être un capot complémentaire d'un capot du coffre arrière du véhicule (solution non représentée) ou constituer lui-même ce capot de coffre arrière, comme illustré. Ce capot s'articule, vers l'arrière (ARR) du véhicule pour s'ouvrir en basculant de l'avant vers l'arrière de ce véhicule autour d'un axe de rotation 7a transversal (perpendiculaire) à l'axe 17.

Pour assurer un large accès à la zone 3, 3a, l'axe 7a est situé assez bas, par exemple sensiblement en partie inférieure du dossier 5a des sièges, près de la limite arrière basse 7b du capot 7 qui est avantageusement fortement galbé avec une partie terminale arrière arrondie vers le bas, qui se termine sur la figure 1 sensiblement verticalement à un niveau d'élévation sensiblement égal à celui de l'assise 5c des sièges, pour définir un bas seuil d'accès au volume 3a.

Le volume arrière 3,3a s'étend, longitudinalement (suivant l'axe longitudinal 17 du véhicule), sous l'arrière de l'élément de toit 2 (lorsqu'il est fermé) et sous le capot de coffre arrière 7. Sa hauteur peut être limitée du fait, latéralement, des passages de roues 19 et, en partie plus centrale de la présence possible du moteur 9.

L'élément 2 de toit est monté coulissant pour un stockage vertical derrière les dossiers 5a des sièges en s'escamotant par basculement sensiblement vertical le long de glissières.

Pour toute la description, on considère le véhicule pour moitié par rapport à son axe longitudinal 17, à gauche ou à droite, ses éléments constitutifs de manoeuvre/guidage des éléments de toit se retrouvant avantageusement de l'autre côté, par symétrie.

Entre la lunette arrière 15 et la traverse de pare-brise 13, plus d'un seul élément mobile de toit 2 pourrait être prévu.

Pour sa manoeuvre, cet élément de toit 2 comporte, vers son extrémité arrière 2b, un doigt ou galet 21 qui est engagé dans une glissière 23 solidaire du bâti 25 et qui s'étend de préférence juste derrière les dossiers de sièges 5 et dans un sens sensiblement vertical. La hauteur de la (chaque) glissière 23 est avantageusement comparable à celle des dossiers 5a, éventuellement y compris les appui-têtes 5b, voire l'assise 5c. La (chaque) glissière 23 est de préférence légèrement galbée, avec une concavité orientée vers l'avant (AVT) du véhicule. Les glissières peuvent être fixées à des arceaux de sécurité 24 s'étendant depuis le plancher du véhicule, jusqu'en haut des sièges, derrière eux.

L'élément de toit 2 est monté pivotant suivant le (chaque) doigt 21, par rapport à la glissière 23 considérée, autour d'un axe 21a transversal (perpendiculaire) à l'axe 17.

Suivant l'axe 21a, le doigt 21 peut être lié à un chariot 27 monté glissant le long de la glissière 23, pour le guidage de l'élément de toit 2.

Ce chariot 27 peut consister en une partie latérale de toit, sensiblement verticale, visible depuis l'extérieur du véhicule et appartenant donc à la carrosserie. Dans ce cas, ces deux panneaux latéraux 27 définiront donc chacun une aile latérale visible de toit située en limite latérale du toit, à gauche ou à droite de l'arrière de l'élément de toit, et seront engagés intérieurement avec l'une des dites glissières.

Pour évoluer entre ses positions ouverte et fermée, l'élément de toit 2 va pivoter selon l'axe 21a d'une position sensiblement horizontale au dessus de l'habitacle à une position sensiblement verticale, derrière lui. Un dispositif de verrouillage sélectif lié à l'élément et à la glissière peut retenir l'élément 2 tant qu'il doit demeurer vertical, mais permettre sa libération en position haute de cet élément, pour qu'il puisse être rabattu vers l'avant lorsque le toit doit être refermé.

Ainsi, l'élément de toit 2 peut être déplacé par glissement long de cette (chacune de ces) glissière(s) pour se ranger sensiblement à la verticale derrière les dossiers 5a de sièges, dans l'espace de rangement sensiblement vertical 3 qui lui est réservé de préférence juste le long de l'arrière de ces dossiers, jusqu'au plancher 30 du coffre et qui peut communiquer avec le volume 3a.

Pour déplacer ainsi l'élément de toit 2, on ouvre le capot 7, comme montré en pointillés sur la figure1. S'il s'agit d'un capot de coffre arrière articulé en son extrémité arrière par l'axe de rotation 7a, comme illustré, l'ouverture du capot va aussi permettre un large accès au volume 3a, pour un accès bagages ou un accès moteur.

Sur la figure 1, on peut constater qu'à l'extrémité avant du capot, la lunette arrière 15 se dresse juste au dessus de l'espace de rangement 3a, en position fermée de ce capot , ce qui montre l'importance de l'accès que l'on peut obtenir.

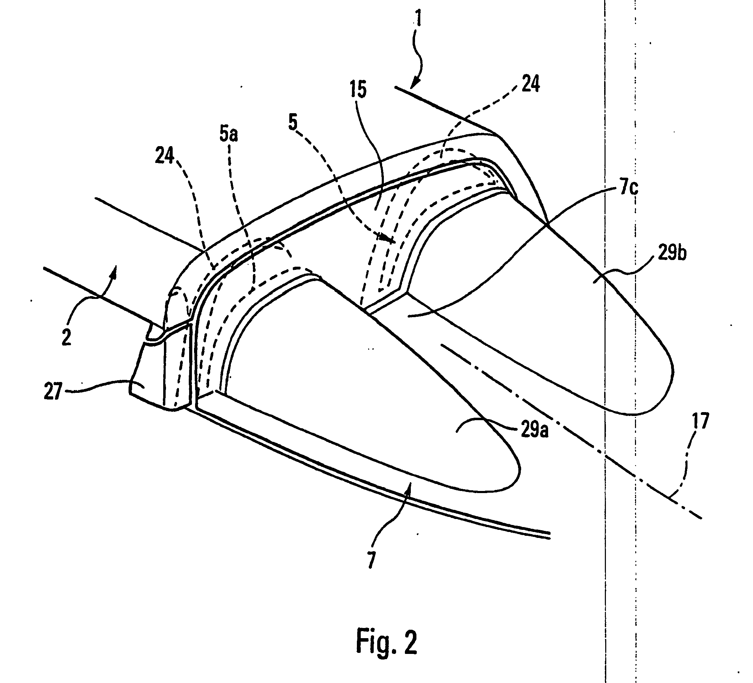

Lorsque l'élément de toit 2 est position ouverte (basculé dans le coffre arrière) la vitre solidaire du panneau 15 joue avantageusement un rôle de « wind stop » (ou « stop vent ») comparable à un filet anti-remous, fréquent sur les cabriolets. Pour cela, la lunette arrière se dresse fixement et sensiblement verticalement jusqu'au moins sensiblement la limite supérieure des dossiers 5a de siège, dans la position fermée de ce capot, et s'étend sur sensiblement toute la largeur du véhicule, derrière ces dossiers, comme montré notamment figure 2.

Sur cette figure, on peut aussi voir que derrière chaque dossier s'étend un bourrelet 29a,29b profilé (en sifflet) parallèlement à l'axe 17 et lié fixement à la face supérieure du capot 7. D'autres formes peuvent être trouvées, le style étant libre.

Comme on l'a compris de ce qui précède, lorsque l'utilisateur veut ouvrir son toit afin de transformer son véhicule en cabriolet, le capot 7, y compris la lunette 15, va basculer vers de l'avant vers l'arrière selon l'axe de rotation 7a. L'élément de toit 2 peut alors être rangé dans sa position sensiblement verticale, en basculant autour de 21a, chaque panneau de toit latéral 27 coulissant le long de la glissière 23 concernée, entraînant ainsi l'élément 2 dans sa position de stockage. Le capot 7 peut ensuite rebasculer vers l'avant. Avec un tel système de toit 2 et de capot arrière 7 comportant une telle vitre arrière, il toujours facile d'avoir accès au moteur si celui-ci est à l'arrière, quelle que soit la configuration du véhicule en coupé ou en cabriolet.

## Revendications

1. Un véhicule découvrable présentant un axe longitudinal, un avant et un arrière, et comprenant :
- un bâti (25),
- un habitacle (11) équipé de sièges (5),
- un toit rigide escamotable (1), mobile entre une position fermée au-dessus de l'habitacle et une position ouverte dans laquelle le toit est rangé derrière lesdits sièges, le toit comprenant au moins un élément de toit (2) ainsi mobile,
- un capot arrière (7) situé derrière les sièges,
- un espace (3) sensiblement vertical de rangement dudit élément de toit (2) dans sa position ouverte, l'espace étant situé, suivant l'axe longitudinal du véhicule, derrière les sièges,
- des moyens (21,23,27) de déplacement pour déplacer de façon guidée ledit élément (3) de toit qui bascule entre sa position sensiblement horizontale, fermée au-dessus de l'habitacle, et sa position sensiblement verticale, ouverte, dans l'espace de rangement,
**caractérisé en ce que** :
* le capot arrière (7) est articulé en rotation sur le bâti, vers une extrémité arrière du véhicule, et s'ouvre ainsi en basculant de l'avant vers l'arrière du véhicule, autour d'un axe de rotation (7a) transversale à l'axe longitidinal (17)
* l'espace (3) de rangement est accessible depuis l'extérieur du véhicule en position ouverte du dit capot arrière,
* et, vers l'avant du capot arrière, se dresse à l'extérieur du véhicule une lunette arrière (15) liée fixement à ce capot mais séparée de l'élément de toit (2) en position ouverte du toit, la lunette arrière se plaçant derrière cet élément de toit, pour fermer l'habitacle à l'arrière, dans la position fermée du toit et dudit capot arrière.

2. Le véhicule selon la revendication 1, **caractérisé en ce que** la lunette arrière (15) se dresse fixement et sensiblement verticalement, à l'avant du capot arrière (7), juste au dessus de l'espace derangement (3), en position fermée de ce capot arrière.

3. Le véhicule selon l'une quelconque des revendications précédentes **caractérisé en ce que**, dressée sensiblement verticalement à l'avant du capot arrière (7), jusqu'au moins sensiblement la limite supérieure des dossiers (5a) de siège, dans la position fermée de ce capot, et s'étendant sur sensiblement toute la largeur du véhicule, derrière le dossier des sièges, alors que l'élément de toit (2) est rangé dans l'espace de rangement, la lunette arrière définit un panneau sensiblement plan, anti-remous vis-à-vis des filets d'air, lorsque le véhicule roule.

4. Le véhicule selon l'une quelconque des revendications précédentes, **caractérisé en ce que** la lunette arrière (15) est un panneau qui, en position fermée du capot arrière (7), est dressé sensiblement à la verticale :
- dudit élément de toit (2), en position ouverte de celui-ci, rangé dans son espace de rangement,
- et de l'espace de rangement (3), juste au-dessus de lui, en position fermée de capot arrière.

5. Le véhicule selon l'une quelconque des revendications précédentes, **caractérisé en ce que**, dans la position fermée du capot arrière (7), derrière la lunette arrière et derrière chaque dossier de siège (5) s'étend un bourrelet (29a,29b) profilé parallèlement à l'axe longitudinal (17) et lié fixement à la face supérieure du capot (7).

6. Le véhicule selon l'une quelconque des revendications précédentes, **caractérisé en ce que** :
- les moyens de déplacement du dit élément de toit comprennent au moins une glissière (23) disposée sensiblement verticalement et située, longitudinalement, sensiblement au niveau des sièges (5), ou juste derrière eux,
- et, pour sa manoeuvre, ledit élément de toit (2) comporte, vers son extrémité arrière (2b), au moins un doigt (21) engagé dans ladite glissière (23) solidaire du bâti (25) tant en position fermée qu'ouverte de l'élément de toit.

7. Le véhicule selon la revendication 5, **caractérisé en ce que**, par le ou chaque doigt (21), l'élément de toit (2) est, vers l'arrière, articulé en rotation, autour d'un axe (21a) transversal à l'axe longitudinal, vis-à-vis d'au moins un panneau latéral (27) auquel est lié le ou chaque doigt (21), ce panneau latéral s'étendant sensiblement verticalement et étant engagé avec la glissière (23) pour y coulisser comme un chariot.

8. Le véhicule selon la revendication 7, **caractérisé en ce qu'**il comprend deux dits panneaux latéraux (27) définissant chacun une aile latérale visible de toit située en limite latérale du toit, de part et d'autre de l'arrière dudit élément de toit (2),
et engagés intérieurement avec l'une des dites glissières.

9. Le véhicule selon l'une quelconque des revendications précédentes **caractérisé en ce que** :
- les sièges (5) présentent une assise (5c) et sont ceux situés, en utilisation normale du véhicule, le plus à l'arrière de l'habitacle, juste devant le volume de rangement (3) derrière lequel s'étend un volume arrière (3a) réservé au chargement de bagages ou au logement d'un moteur (9) pour le déplacement du véhicule,
- et le capot arrière (7) s'étend, suivant l'axe longitudinal (17) du véhicule, sensiblement entre l'arrière des sièges et l'extrémité arrière du véhicule où il est articulé en rotation par rapport au bâti (25) autour d'un axe (7a) transversal au dit axe longitudinal, ce capot présentant, vers l'arrière, une forme galbée se terminant sensiblement verticalement (7b) à un niveau d'élévation sensiblement égal à celui de l'assise (5c) des sièges, pour définir un bas seuil d'accès au volume (3a) défini dans le véhicule, sous le capot, et auquel celui-ci permet l'accès en position basculée vers l'arrière.

10. Le véhicule selon l'une quelconque des revendications précédentes **caractérisé en ce que** le volume du véhicule défini sous le capot arrière (7) lorsque celui-ci est en position fermée, contient un moteur (9) de déplacement du véhicule situé donc à l'arrière de celui-ci.

## Claims

1. A convertible vehicle with a longitudinal axis, front and rear, comprising:
- a frame (25),
- a passenger cell (11) equipped with seats (5),
- a rigid retractable roof (1), mobile between a closed position above the passenger cell and an open position in which the roof is stored behind said seats, the roof comprising at least one roof element (2) that can move in this way,
- a rear bonnet (7) located behind the seats,
- an essentially vertical space (3) for storage of said roof element (2) in its open position, the space being located, according to the longitudinal axis of the vehicle, behind the seats,
- moving means (21, 23, 27) for guided movement of said roof element (3) which swings between its essentially horizontal position, closed above the passenger cell, and its essentially vertical position, open, in the storage space, **characterised in that**:
* the rear bonnet (7) is articulated in rotation on the frame, towards a rear extremity of the vehicle, and thus opens by swinging from the front towards the rear of the vehicle, around an axis of rotation (7a) transverse to the longitudinal axis (17).
* the storage space (3) is accessible from the exterior of the vehicle in the open position of said rear bonnet,
* and, towards the front of the rear bonnet, a rear window (15) is located on the outside of the vehicle, fixed to this bonnet but separated from the roof element (2) in the open position of the roof, the rear window being located behind this roof element, in order to enclose the rear of the passenger cell in the closed roof position of the roof and said rear bonnet.

2. The vehicle according to claim 1, **characterised in that** the rear window (15) stands fixed and essentially vertical, at the front of the rear bonnet (7), just above the storage space (3), in the closed position of the rear bonnet.

3. The vehicle according to any one of the preceding claims, **characterised in that**, standing essentially vertically at the front of the rear bonnet (7), up to at least essentially the upper limit of the seat backs (5a), in the closed position of this bonnet, and extending essentially along the whole width of the vehicle, behind the seat backs, while the roof element (2) is stored in the storage space, the rear window defines an essentially flat screen, deflecting the air currents, when the vehicle is moving.

4. The vehicle according to any one of the preceding claims, **characterised in that** the rear window (15) is a screen that, in the closed position of the rear bonnet (7) stands essentially to the vertical:
- of said roof element (2), in the open position thereof, stored in its storage space,
- and of the storage space (3) just above it, in the closed position of the rear bonnet.

5. The vehicle according to any one of the preceding claims, **characterised in that**, in the closed position of the rear bonnet (7), behind the rear window and behind each seat back (5), a weatherstrip (29a, 29b) lies streamlined parallel to the longitudinal axis (17) and affixed to the upper side of the bonnet (7).

6. The vehicle according to any one of the preceding claims, **characterised in that**:
- the means of moving said roof element comprise at least one slide (23) arranged essentially vertically and located, longitudinally, essentially parallel to or just behind the seats (5),
- and, for manoeuvring, said roof element (2) comprises, towards its rear end (2b) at least one rod (21) engaged in said slide (23) integral with the frame (25), in both the open and closed position of the roof element.

7. The vehicle according to claim 6, **characterised in that**, for the or each rod (21) the roof element (2) is, towards the rear, articulated in rotation around an axis (21 a) transverse to the longitudinal axis, relative to at least one side panel (27) to which the or each rod (21) is connected, this side panel extending essentially vertically and being engaged with the slide (23) to slide along it like a trolley.

8. The vehicle according to claim 7, **characterised in that** it comprises two side panels (27) each defining a visible lateral with the roof located at the lateral edges of the roof, either side of the rear of said roof element (2), and engaged internally with one of said slide.

9. The vehicle according to any one of the preceding claims, **characterised in that**:
- the seats (5) have a base (5c) and are those located, in normal use of the vehicle, furthest towards the rear of the passenger cell, just before the storage space (3) behind which the rear boot (3a) intended for carrying luggage or a motor (9) for moving the vehicle,
- and the rear bonnet (7) extends, along the longitudinal axis (17) of the vehicle, essentially between the rear of the seats and the rear extremity of the vehicle where it is articulated in rotation relative to the frame (25) around an axis (7a) transverse to said longitudinal axis, this bonnet presenting, towards the rear, a curved form ending essentially vertically (7b) at a level of elevation essentially equal to that of the base (5c) of the seats, in order to define a lower threshold of access to the boot (3a) defined in the vehicle, under the bonnet, and to which it allows access in its position rotated towards the rear.

10. The vehicle according to any one of the preceding claims, **characterised in that** the boot of the vehicle defined under the rear bonnet (7), when this is in the closed position, contains a motor (9) for moving the vehicle, thus located at the rear thereof.

## Patentansprüche

1. Aufdeckbares Fahrzeug mit einer Längsachse, einer Vorderseite und einer Heckseite und mit:
- einem Rahmen (25),
- eine mit Sitzen (5) ausgestattete Fahrgastzelle (11),
- einem versenkbaren steifen Dach (1), das zwischen einer oberhalb der Fahrgastzelle geschlossenen Position und einer geöffneten Position, in welcher das Dach hinter den Sitzen verstaut ist, bewegbar ist, wobei das Dach wenigstens ein so bewegliches Dachelement (2) aufweist,
- einem Kofferraumdeckel (7), der hinter den Sitzen liegt,
- einem im Wesentlichen vertikalen Stauraum (3) für das Dachelement (2) in seiner geöffneten Position, wobei der Raum in Richtung der Längsachse des Fahrzeugs hinter den Sitzen liegt,
- einer Verschiebungseinrichtung (21, 23, 27), um in geführter Weise das Dachelement (3) zu verschieben, das zwischen seiner im Wesentlichen horizontalen Position, geschlossen oberhalb der Fahrgastzelle, und seiner im Wesentlichen vertikalen Position, offen, in den Stauraum schwenkt,
**dadurch gekennzeichnet, dass**:
* der Kofferraumdeckel (7) drehbar an dem Rahmen in Richtung eines hinteren Endes des Fahrzeugs angelenkt ist und sich somit schwenkend von der Vorderzur Heckseite des Fahrzeugs um eine quer zur Längsachse (17) verlaufende Drehachse (7a) öffnet;
* der Stauraum (3) von der Außenseite des Fahrzeugs in der geöffneten Position des Kofferraumdeckels zugänglich ist,
* und sich in Richtung der Vorderseite des Kofferraumdeckels auf der Außenseite des Fahrzeugs ein Heckfenster (15) befindet, das fest mit diesem Deckel verbunden ist, aber von dem Dachelement (2) in der geöffneten Position des Daches getrennt ist, wobei sich das Heckfenster hinter diesem Dachelement anordnet, um die Fahrgastzelle in der geschlossenen Position des Dachs und des Kofferraumdeckels nach hinten zu schließen.

2. Fahrzeug nach Anspruch 1, **dadurch gekennzeichnet, dass** sich das Heckfenster (15) in der geschlossenen Position des Kofferraumdeckels fest und im Wesentlichen vertikal an der Vorderseite des Kofferraumdeckels (7), genau oberhalb des Stauraumes (3) befindet.

3. Fahrzeug nach einem der vorhergehenden Ansprüche, **dadurch gekennzeichnet, dass**, das Heckfenster, wenn das Fahrzeug fährt, eine im Wesentlichen ebene Platte als Windschott bildet, die sich im Wesentlichen vertikal an der Vorderseite des Kofferraumdeckels (7), im Wesentlichen mindestens auf Höhe der oberen Begrenzung der Sitzrückenlehnen (5a) in der geschlossenen Position des Deckels befindet und sich hinter den Sitzrückenlehnen im Wesentlichen über die gesamte Breite des Fahrzeugs erstreckt, während das Dachelement (2) in dem Stauraum angeordnet ist.

4. Fahrzeug nach einem der vorhergehenden Ansprüche, **dadurch gekennzeichnet, dass** das Heckfenster (15) eine Platte ist, die in der geschlossenen Position des Kofferraumdeckels (7) im Wesentlichen in der Vertikalen ausgerichtet ist:
- des Dachelements (2) in der geöffneten Position desselben, das in seinem Stauraum angeordnet ist,
- und des Stauraums (3), genau über demselben in der geschlossenen Position des Kofferraumdeckels.

5. Fahrzeug nach einem der vorhergehenden Ansprüche, **dadurch gekennzeichnet, dass** sich in der geschlossenen Position des Kofferraumdeckels (7) hinter dem Heckfenster und hinter jeder Sitzrückenlehne (5) eine Gummiwulst (29a, 29b) erstreckt, die parallel zur Längsachse (17) profiliert ist und fest mit der Oberseite des Deckels (7) verbunden ist.

6. Fahrzeug nach einem der vorhergehenden Ansprüche, **dadurch gekennzeichnet, dass**:
- die Verschiebungseinrichtung des Dachelements wenigstens eine Schiene (23) umfasst, die im Wesentlichen vertikal angeordnet ist und in Längsrichtung im Wesentlichen auf Höhe der Sitze (5) oder knapp hinter diesen liegt,
- und das Dachelement (2) für seine Handhabung umfasst, in Richtung seines hinteren Endes (2b), wenigstens einen Finger (21), der in die fest mit dem Rahmen (25) verbundene Schiene (23) sowohl in der geschlossenen als auch in der geöffneten Position des Dachelements eingreift.

7. Fahrzeug nach Anspruch 6, **dadurch gekennzeichnet, dass** durch den oder jeden Finger (21) das Dachelement (2) in Richtung der Heckseite drehbar um eine Achse (21a) quer zur Längsachse angelenkt ist, und zwar gegenüber wenigstens einer Seitenplatte (27), welche mit dem oder jedem Finger (21) verbunden ist, wobei diese Seitenplatte sich im Wesentlichen vertikal erstreckt und in die Schiene (23) eingreift, um darin wie ein Schlitten zu gleiten.

8. Fahrzeug nach Anspruch 7, **dadurch gekennzeichnet, dass** dieses zwei solcher Seitenplatten (27) umfasst, welche jeweils einen sichtbaren Seitenflügel des Dachs bilden, der an der seitlichen Begrenzung des Dachs liegt, und zwar beiderseits hinten am Dachelement (2), und innen in eine der Gleitschienen eingreifen.

9. Fahrzeug nach einem der vorhergehenden Ansprüche, **dadurch gekennzeichnet, dass**:
- die Sitze (5) eine Sitzfläche (5c) aufweisen und jeweils bei normaler Benutzung des Fahrzeugs am weitesten an der Heckseite des Fahrzeugs, kurz vor dem Stauvolumen (3) angeordnet sind, hinter welchem sich ein Heckvolumen (3a) erstreckt, das für eine Beladung mit Gepäck oder die Aufnahme eines Motors (9) für die Bewegung des Fahrzeugs vorgesehen ist,
- und sich der Kofferraumdeckel (7) in Richtung der Längsachse (17) des Fahrzeugs im Wesentlichen zwischen der Hinterseite der Sitze und dem hinteren Ende des Fahrzeugs erstreckt, wo dieser drehbar in Bezug zu dem Rahmen (25) um eine Achse (7a) quer zu der Längsachse angelenkt ist, wobei dieser Deckel in Richtung Heckseite eine konturierte Form aufweist, die im Wesentlichen vertikal (7b) auf im Wesentlichen der gleichen Höhe wie die Sitzfläche (5c) der Sitze endet, um eine tiefe Zugriffsschwelle auf das Volumen (3a) zu bilden, das in dem Fahrzeug unter dem Deckel ausgebildet ist und auf welches dieser in der nach hinten geschwenkten Position einen Zugriff erlaubt.

10. Fahrzeug nach einem der vorhergehenden Ansprüche, **dadurch gekennzeichnet, dass** das Volumen des Fahrzeugs, das unter den Kofferraumdeckel (7) gebildet wird, wenn sich dieser in der geschlossenen Position befindet, einen Motor (9) zum Bewegen des Fahrzeugs enthält, der somit an der Heckseite desselben liegt.
